# EUROPEAN PATENT APPLICATION

(11) **EP 4 417 278 A1**
(43) Date of publication of application: **21.08.2024**
(21) Application number: 23386014.7
(22) Date of filing: 15.02.2023
(51) Int. Cl.: A63F 13/86, A63F 13/48, A63F 13/53, A63F 13/79, A63F 13/655

(54) **APPARATUS, SYSTEMS AND METHOD FOR VIDEO COMPOSITING**

(71) Applicant: Sony Interactive Entertainment Inc., Tokyo 108-0075 (JP)
(72) Inventor: Pereira Jimenez, Daniel, London, W1F 7LP (GB); Rodriguez Quiros, Estefania, London, W1F 7LP (GB); Michailidis, Lazaros, London, W1F 7LP (GB); Lucas Barcias, Jesus, London, W1F 7LP (GB); Henderson, Chris, London, W1F 7LP (GB)
(74) Representative: D Young & Co LLP

(57) **Abstract**

A data processing apparatus comprises receiving circuitry to receive a plurality of video streams associated with a plurality of users, video stream compositing circuitry to generate a composite video stream comprising composite video images, each composite video image comprising a composite video representation associated with video images from two or more of the plurality of video streams, and output circuitry to output the composite video stream.

## Description

### Field of the Disclosure

The present disclosure relates to the field of processing data, and more particularly to processing video images. In particular, the present disclosure relates to apparatus, systems and methods for generating a composite video stream comprising composite video images.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Interactive gaming applications can be executed to provide video output for users during video gaming sessions. Video gaming applications may be executed by local devices and/or remote server devices to generate images for display to users for playing single player games as well as multiplayer networked games.

Video games are increasingly being designed for use by remotely located users for single-player game play or networked multiplayer game play. Such video games can allow users to view images of their own game play during playing of a video game. However, prior to and/or during and/or after such game play, users may typically have no or limited interaction with other users and/or may lack awareness of the activities of other users. For example, prior to and/or after playing a video game, users may lack awareness of the activities of other users and may feel a sense of isolation, and in some cases may be unaware of opportunities to interact with other users. During playing of a video game, users may lack awareness of activities of other users (e.g. friends), and may be unaware of opportunities to interact with the other users.

There is a need to improve interactions for remote users.

It is in this context that the present disclosure arises.

### Summary

Various aspects and features of the present invention are defined in the appended claims and within the text of the accompanying description.

### Brief Description of the Drawings

The present technique will be described further, by way of example only, with reference to embodiments thereof as illustrated in the accompanying drawings, in which:
Figure 1 is a schematic diagram illustrating an example of an entertainment device;
Figure 2 is a schematic diagram illustrating a data processing apparatus;
Figure 3 is a schematic diagram illustrating a system;
Figure 4 is a schematic diagram illustrating an example of a composite video image;
Figures 5 and 6 are schematic flowcharts illustrating methods;
Figure 7 is a schematic diagram illustrating another data processing apparatus; and
Figure 8 is a schematic diagram illustrating another example of a composite video image.

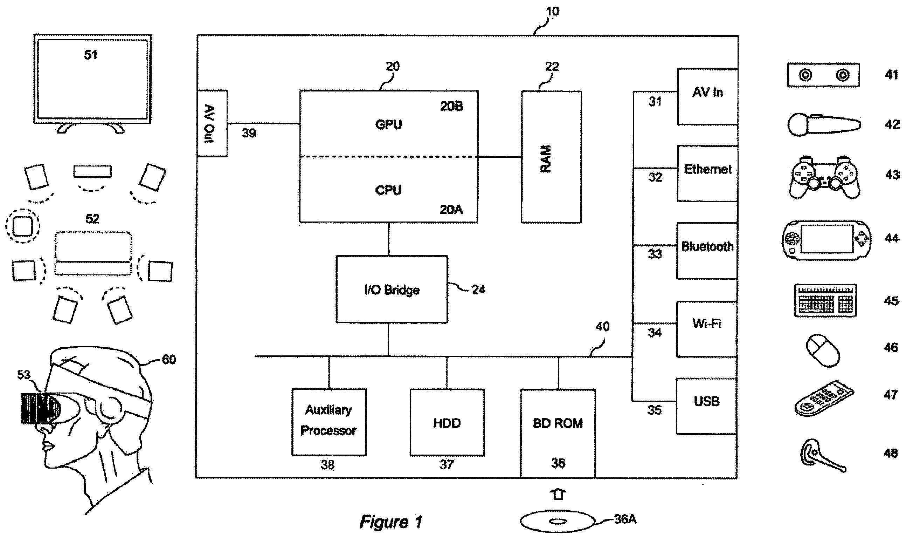

Embodiments of the invention will now be described, by way of example only, with reference to the accompanying drawings, wherein like reference numerals designate identical or corresponding parts throughout the several views. Figure 1 schematically illustrates an example entertainment device such as the Sony^{®} PlayStation 4^{®} entertainment device. A system unit 10 is provided, with various peripheral devices connectable to the system unit.

The system unit 10 comprises an accelerated processing unit (APU) 20 being a single chip that in turn comprises a central processing unit (CPU) 20A and a graphics processing unit (GPU) 20B. The APU 20 has access to a random access memory (RAM) unit 22.

The APU 20 communicates with a bus 40, optionally via an I/O bridge 24, which may be a discreet component or part of the APU 20.

Connected to the bus 40 are data storage components such as a hard disk drive 37, and a Blu-ray ^{®} drive 36 operable to access data on compatible optical discs 36A. Additionally the RAM unit 22 may communicate with the bus 40.

Optionally also connected to the bus 40 is an auxiliary processor 38. The auxiliary processor 38 may be provided to run or support the operating system.

The system unit 10 communicates with peripheral devices as appropriate via an audio/visual input port 31, an Ethernet ^{®} port 32, a Bluetooth ^{®} wireless link 33, a Wi-Fi ^{®} wireless link 34, or one or more universal serial bus (USB) ports 35. Audio and video may be output via an AV output 39, such as an HDMI port.

The peripheral devices may include a monoscopic or stereoscopic video camera 41 such as the PlayStation Eye ^{®}; wand-style videogame controllers 42 such as the PlayStation Move ^{®} and conventional handheld videogame controllers 43 such as the DualShock 4 ^{®} or DualSense ^{®}; portable entertainment devices 44 such as the PlayStation Portable ^{®} and PlayStation Vita ^{®}; a keyboard 45 and/or a mouse 46; a media controller 47, for example in the form of a remote control; and a headset 48. Other peripheral devices may similarly be considered such as a printer, or a 3D printer (not shown).

The GPU 20B, optionally in conjunction with the CPU 20A, processes data and generates video images (image data) and optionally audio for output via the AV output 39. Optionally, the audio may be generated in conjunction with or instead by an audio processor (not shown).

The video and optionally the audio may be presented to a television 51. Where supported by the television, the video may be stereoscopic. The audio may be presented to a home cinema system 52 in one of a number of formats such as stereo, 5.1 surround sound or 7.1 surround sound. Video and audio may likewise be presented to a head mounted display unit 53 worn by a user 60.

In operation, the entertainment device defaults to an operating system such as a variant of FreeBSD 9.0. The operating system may run on the CPU 20A, the auxiliary processor 38, or a mixture of the two. The operating system provides the user with a graphical user interface such as the PlayStation Dynamic Menu. The menu allows the user to access operating system features and to select games and optionally other content.

Figure 1 therefore provides an example of an entertainment device suitable for performing processing for executing an instance of an interactive gaming application and generating images and audio for output to a user. The entertainment device may for example generate images for display by a display device such as the television 51 and/or the head mounted display unit 53.

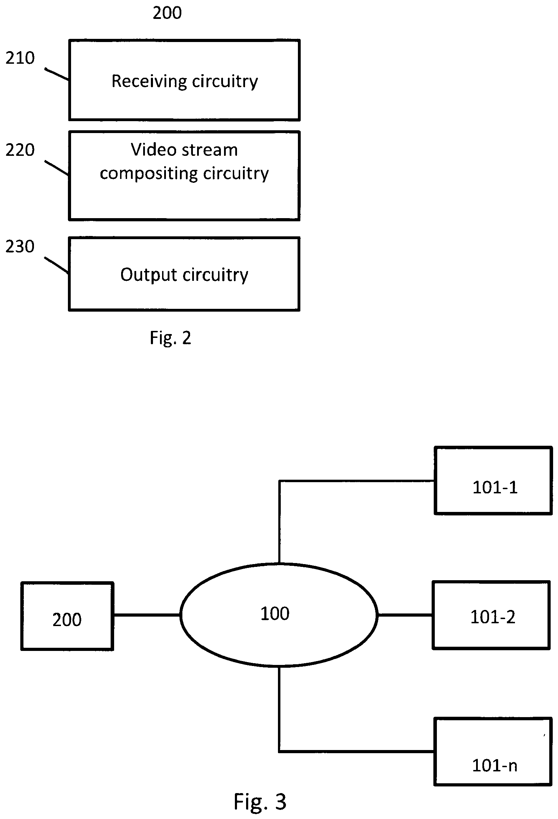

Figure 2 schematically illustrates a data processing apparatus in accordance with embodiments of the disclosure.

The data processing apparatus 200 comprises receiving circuitry 210, video stream compositing circuitry 220 and output circuitry 230. The receiving circuitry 210 is configured to receive a plurality of video streams associated with a plurality of users. The video stream compositing circuitry 220 is configured to generate a composite video stream comprising composite video images, each composite video image comprising a composite video representation associated with video images from two or more of the plurality of video streams. The output circuitry 230 is configured to output the composite video stream.

The data processing apparatus 200 is configured to receive the plurality of video streams, in which each video stream is associated with a different user. The video streams may be generated by any suitable processing device including, for example, devices that are local to users (e.g. personal computing devices and/or entertainment devices such as that in Figure 1) and/or remote server devices.

The respective video streams comprise images generated for display to the different users as part of their interactions with their respective processing devices. For example, a first user may be viewing a so-called home screen associated with a given processing device (e.g. PlayStation^{®}5 or PlayStaton^{®}4 home screen), whereas a second user may be viewing images of a video game being played by that user. The plurality of video streams thus comprise video images for display to the different users which represent their activities, such as playing of video games, online browsing, menu navigation and so on. Such video streams can be acquired by the data processing apparatus 200 for generating the composite video stream. In particular, when playing a video game a video stream generated for the video game may comprise video images with a viewpoint corresponding to that of a user's character being controlled by the user in the video game. As such, the video images associated with at least some of the video streams may have a first person or third person viewpoint of a game environment for video games.

The video stream compositing circuitry 220 is configured to generate the composite video stream comprising composite video images, in which each composite video image comprises a composite video representation obtained using the video images from two or more of the plurality of video streams. In this way, video streams including video images generated for display to two or more different users can be represented in the composite video stream. For example, the composite video representation in a given composite video image may comprise a first portion including some or all of a video image from a first video stream and a second portion including some or all of a video image from a second video stream.

The plurality of video streams may for example each comprise visual representations of various activities participated in by different users when logged into an account of an online service (e.g. PlayStation^{®} Network). When users are logged into their account for an online service, video images generated for display to the users can also be communicated to the data processing apparatus 200 for allowing use of the video streams for creation of one or more composite video streams to be shared with one or more other users of the online service. Therefore, a video stream associated with one user may be used for creating a composite video stream for output to another user, so that the another user can view a stream of composite video images including activities of other users currently logged into their account for the online service.

In some examples, the video stream compositing circuitry 220 is configured to generate the composite video stream in dependence upon each of the plurality of video streams received by the receiving circuitry 210. For example, the receiving circuitry 210 may receive N video streams (where N is an integer of any suitable value) and the video stream compositing circuitry 220 can be configured to generate a composite video image comprising a composite video representation including at least some of a video image from each of the N video streams. Hence, in some cases a composite video image may be generated to include a composite representation using a video image from each of the plurality of video streams.

However, in other examples a selection may be performed with respect to the plurality of video streams received by the receiving circuitry 210 so that a selected subset of the plurality of video streams received by the receiving circuitry 210 is used to generate the composite video stream. In particular, selection may be performed so as to select video streams that are more relevant for a given user (or a group of users) to which the composite video stream is to be output. Alternatively or in addition, selection may be performed to select a subset of the plurality of video streams that can be visually represented within a single composite video image whilst ensuring the clear visibility of each of the video streams. In particular, in some cases the number of received video streams may be sufficiently large that visually presenting a video image from each stream in a single composite video image may be impractical. Techniques for selection of video streams will be discussed in more detail later.

Hence more generally, the data processing apparatus 200 is operable to generate the composite video stream including composite video images each comprising a composite representation generated using two or more video images from two or more video streams, in which the two or more video images represent activities of two or more different users.

The composite video stream can be output to various destinations. In some examples where the data processing apparatus 200 is provided as part of a server, the composite video stream is output to one or more user devices via one or more communication networks (e.g. the internet). Alternatively or in addition, the data processing apparatus 200 may be provided as part of a first server device which outputs the composite video stream to another server device (e.g. a streaming server associated with an online service) for streaming thereby to one or more other devices.

The composite video stream can be provided to one or more user devices, and the composite video images displayed to one or more users to provide a view of the current activities of the different users. In some examples, the data processing apparatus 200 may receive a number of video streams (potentially a very large number) and perform a selection with respect to the received video streams to select video streams which are likely to be of interest for a given user so as to generate the composite video stream for a specific given user. Video streams may be selected using information associated with the given user, such as their preferences and/or dislikes, so as to select video streams that are likely to be of interest. Alternatively or in addition, the data processing apparatus 200 may be operable to select video streams associated with individual users which are associated with the given user (e.g. identified as being friends with the given user) so that the composite video stream can be generated and output to the given user for providing the given user with a composite video stream visually depicting the on-screen activities currently participated in by the associated users.

Hence, in some examples the data processing apparatus 200 can be configured to generate a first composite video stream for output to a first user using video streams which are selected based on information associated with the first user. In addition to this, the data processing apparatus 200 can be configured to generate a second composite video stream for output to a second user using video streams which are selected based on information associated with the second user. Therefore, a number of video streams can be received and two different composite video streams may be generated from the set of received video streams by selecting different video streams so as to provide a first user with a composite video stream relevant for the first user and provide a second user with a different composite video stream that is relevant for the second user.

Whilst the techniques to be discussed below generally refer to techniques involving the creation of a single composite video stream from the received video streams, the techniques may be similarly performed to create any number of composite video streams. Moreover, the video stream compositing circuitry 220 can be configured to output a respective composite video stream for any number of users, and a given video stream received by the receiving circuitry 210 may in some cases be used in multiple concurrently generated composite video streams. For example, a video stream may be received for a user A, and composite video streams generated for a user B and a user C may both comprise video images included in the video stream received for the user A.

As explained above, the video streams received by the receiving circuitry 210 may be video streams generated for display to users that are each logged into an account of an online service. Hence, users can log into their accounts to allow their video streams to be shared to the data processing apparatus 200 for the creation of one or more composite video streams for output to various other users having user accounts. In some cases, users may wish to receive a composite video stream without allowing their own video stream to be used for creation of composite video streams. Hence, in some cases users can select whether to share their video stream to the data processing apparatus 200. For example, a selectable graphical icon may be provided as part of a user interface for allowing a user to select an option for disabling sharing of their video stream, and/or a dedicated input button may be provided on a handheld controller for controlling enabling and disabling of such sharing. Alternatively or in addition, a user may specify, in advance, one or more properties for controlling when their video stream can be shared and not shared. For example, a user may specify one or more of a specific video game, and a time of day for which their video stream is not to be shared to the data processing apparatus 200. More specifically, users may be able to specify certain in-game regions (e.g. portions of a game environment) for which sharing of the video stream is disabled, and/or specify that sharing is disabled when viewing menu screens (for enhancing security of sensitive information). Therefore, rather than requiring a user to manually select when to allow and disallow sharing of the video stream, one or more properties can be specified for automatically controlling whether to share the video stream. Such techniques can be used to allow a user to specify that for menu screens per se or for one or more types of menu screen, sharing of the video stream is to be disabled. For example, a user may specify one or more types of menu screen comprising personal information so that when a user views one or more of the specified types of menu screens (e.g. a menu screen displaying banking information) then sharing can be disabled without the user needing to remember to manually disable the sharing.

By generating and outputting a composite video stream to a given user, the given user can quickly understand the current activities of the other users. For example, the composite video stream may include composite video images depicting another user's on-going game play in a certain video game whilst also depicting on-going gameplay in another video game of another user. In some cases, selection of the video streams used for creating the composite video stream for output to the given user may be performed based on a list of associated users (e.g. friends list including friend users and/or a follow list including followed users) for the given user. In this way, video streams including activities of other user's known to the given user can be selected for creating the composite video stream. This can be beneficial for allowing a user to understand current activities of one or more associated users and can assist in allowing users to coordinate their online activities.

In some embodiments of the disclosure, the data processing apparatus 200 may be provided as part of a server apparatus. In some examples, the server apparatus may be a server associated with a gaming server that executes instances of video game sessions so that the server receives video streams from the gaming server.

Figure 3 schematically illustrates an example of a system comprising the data processing apparatus 200. The system comprises the data processing apparatus 200 which communicates with the client devices 101-1, 101-2 ... 101-n via the network 100. Whilst this example shows three client devices, the number of client devices is not particularly limited and there may be any suitable number of client devices (n may take any suitable value).

in example of Figure 3, the data processing apparatus 200 may be a server apparatus. The data processing apparatus 200 may receive any suitable number of video streams. In the example shown in Figure 3, the data processing apparatus 200 may receive video streams from each of the client devices 101-1, 101-2 ... 101-n via the network 100. This represents an example in which video gaming applications executed locally by the client devices generate video streams which are communicated to the data processing apparatus 200 via the network 100 (e.g. the internet). Alternatively or in addition, one or more video games may be executed by a gaming server (not shown in Figure 3) so that video streams are generated by the gaming server and communicated to the client devices via the network 100. The video streams generated by the gaming server can also be received by the data processing apparatus 200. This represents an example in which video games executed remotely by one or more gaming servers generate video streams which are received by the data processing apparatus 200.

Hence more generally, the data processing apparatus 200 can be configured to receive a plurality of video streams generated by one or more of a user's local device (e.g. game console or personal computer) and a server (e.g. a gaming server that executes video games being played by remote users or a streaming server streaming images of such video games).

Referring again to Figure 2, the data processing apparatus 200 comprises the receiving circuitry 210 which is configured to receive a plurality of video streams associated with a plurality of users. The video streams may have any suitable video compression format and the data processing apparatus 200 may comprise any suitable decoder for decoding the received video streams. Alternatively, the data processing apparatus 200 may communicate with another device that performs decoding of compressed video streams so as to receive the decoded video streams from the another device via one or more of a wired and a wireless communication.

The video streams may have any suitable image resolution and image frame rate and may be generated by a range of different devices, including user devices and server devices. For example, the video images may have a resolution of 1080p or 4K and a frame rate in the range 60-120 Hz. Other image resolutions and frame rates are also considered.

In some examples, the data processing apparatus 200 may receive video streams having a range of different frame rates and image resolutions. For example, a first video stream may have a frame rate of 60 Hz and a second video stream may have a frame rate of 120 Hz. In such cases, the video stream compositing circuitry 220 can be configured to generate the composite video stream with a frame rate that is substantially the same as a frame rate for a video stream having a lowest frame rate among the video streams composited for creating the composite video stream. For example, a first video stream having a 60 Hz frame rate and a second video stream having a 120 Hz frame rate may be used to generate the composite video stream with a 60Hz frame rate by discarding every other image frame of the second video stream. However, this can result in a drop in the frame rate below what is achievable using the second video stream. Therefore, in some cases the video stream compositing circuitry 220 can instead be configured to generate the composite video stream with a frame rate that is substantially the same as a frame rate for a video stream having a highest frame rate among the video streams composited for creating the composite video stream. For example, when using the above mentioned first and second video streams having the respective frame rates of 60 Hz and 120 Hz, the composite video stream may be generated to have a 120 Hz frame rate by using each image frame in the second video stream (that is a 1 to 1 correspondence between the image frames of the second video stream and the composite video image frames of the composite video stream) and repeating each image frame in the first video stream (that is repeating each image frame once so that there is a 1 to 2 correspondence between the image frames of the first video stream and the composite video image frames of the composite video stream). In some cases, where a group of respective video streams are to be used for generating the composite video stream, a frame rate for the composite video stream to be generated may be selected which corresponds to one of: a lowest frame rate among the group; a highest frame rate among the group; and an average (e.g. median) frame rate among the group.

Hence, in some embodiments of the disclosure the video stream compositing circuitry 220 is configured to generate the composite video stream having a frame rate that is the same as a frame rate associated with a video stream having a highest frame rate among the plurality of video streams to be used to generate the composite video stream. In this way, the frame rate associated with the highest frame rate video stream can be preserved and more generally quality of the composite video stream can be preserved.

Of course, in some examples each of the video streams to be composited to generate the composite video stream may have a same frame rate, in which case the composite video stream can be generated with that same frame rate.

In a similar manner, an image resolution may differ between the video streams to be used to generate the composite video stream. For example, a first video stream may comprise image frames having a first image resolution and a second video stream may comprise image frames having a second image resolution. The composite video stream comprises composite video images which include a composite representation associated with an image frame from the first video stream and an image frame from the second video stream. Therefore, generally image frames associated with the first and second video streams are resized so as to both be presented within a single frame of the composite video stream and are thus down sampled. The resizing may be performed by one or more of an image scaling operation and an image cropping operation. The composite video images generated by the video stream compositing circuitry 220 may have any suitable image resolution and any suitable aspect ratio.

The video streams generally comprise video images which are generated for display to a respective user when interacting with their device (e.g. during playing of a game, whilst waiting for a game to load and/or whilst navigating one or more menus). The video stream for a respective user thus includes a sequence of video images that are to be displayed to the respective user and the content of the video images may thus vary depending on the different activities being participated in by the different users.

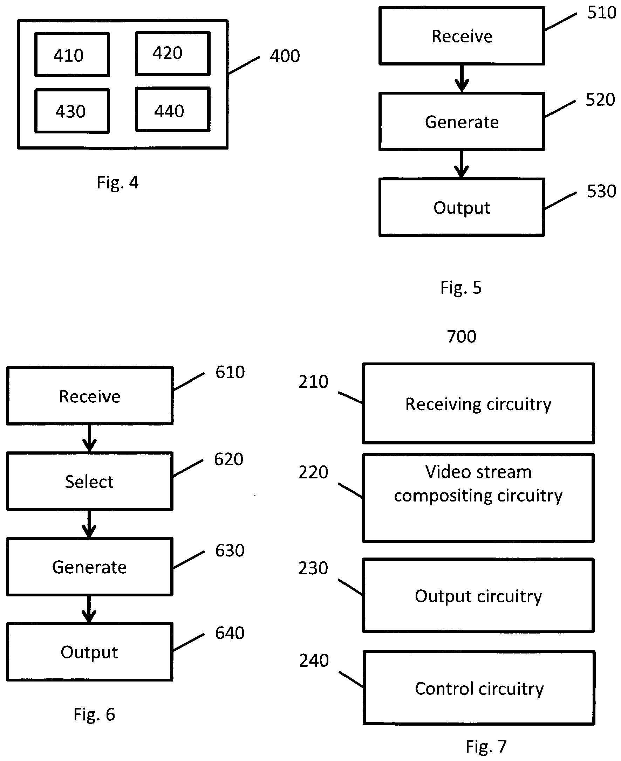

In some embodiments of the disclosure, the composite video representation in a composite video image comprises a plurality of respective image regions, each image region comprising a representation of a video image associated with a different video stream of the plurality of video streams. Figure 4 schematically illustrates an example of a composite video image 400 comprising four respective image regions 410, 420, 430, 440. The video stream compositing circuitry 210 can be configured to allocate a respective video stream to a respective image region in a composite video image. A same image region (having a same position and size) in each successive composite video image can be used for presenting the video images from a same video stream. In this way, each image region can be visually considered as a separate screen region for presenting the content included in a respective video stream.

The video images included in the video streams may be subjected to one or more image processing operations for fitting the video images (or a portion of the video images) to the image regions. One or more image processing operations can be performed, such as one or more from the list consisting of: image scaling; image cropping; colour balance adjustment; and brightness adjustment. In some examples, image scaling may be applied to video images from a video stream to resize at least one of the images with respect to an image region in a composite video image (e.g. rescaling may be applied whilst maintaining or varying an aspect ratio of the images). For example, a 1920x1080 video image may be received and image scaled to a size and shape that substantially matches the size and shape of the image region 410 which generally will be expected to be smaller than 1920x1080 in the composite video image. In some examples, the composite image may have a resolution of 1920x1080 or 3840x2160 (or potentially an image resolution suitable for use as a panoramic image or a wide FOV image for display by an HMD), and typically one or more scaling operations can be performed for a respective video image to obtain a target shape and size for the video image that corresponds to a region of the composite video image. For example, the composite video image may in some cases comprise M respective image regions (where M is a value in the range 2 to 50) each corresponding to a same sized sub-region of the composite video image.

Figure 4 illustrates an example in which video images from four different video streams associated with four different users can be included in a same composite video image. However, the number of image regions is not particularly limited and in some examples may have a value much greater than four. As stated above, the number of image regions may have a value in the range 2-50. A size and a number of the image regions can be varied accordingly to make efficient use the area of a composite video image. In some cases, the video stream compositing circuitry 220 may generate composite video images which also include a blank region or transparent region. As explained later, such a blank region or transparent region may be provided for allowing the composite video images to be displayed at a user device with or as an overlay image so that a video image generated for display to a user of the user device (e.g. video images for a game being played by that user) can be displayed using the blank region or transparent region. In such cases, the use of the blank or transparent region may be such that a smaller number of image regions for presenting the video streams are used and/or smaller size of the image regions is used than would be the case when not providing the blank region or transparent region.

In some embodiments of the disclosure, at least some of the image regions have a substantially same shape and substantially same size in the composite video representation. In the example of Figure 4, the respective image regions are shown as having a same size and shape. However, in other cases at least one of the image regions may have a different size and/or shape. For example, some image regions may have a square shape while others may have a rectangular shape. Any suitable polygonal shape may be used. In some examples, one or more of the image regions may have a circular or ovoidal shape.

In some examples, one or more of the respective image regions in a composite video image may comprise a computer generated image surrounding the respective image region to give an appearance of a respective screen. Alternatively, a small separation distance may be provided between adjacent image regions to provide a visual boundary therebetween. The small separation distance may in some cases be shaded in black or another suitable colour. Alternatively or in addition, the respective image regions may be arranged with respect to each other in abutment so that there are no gaps (or no apparent gaps as perceived by the human eye) separating one region from an adjacent region. This may be particularly beneficial in that for a same given number of video streams each represented in the composite video images, a size of each image region can be made larger compared to the case in which a separation is provided therebetween. Hence more generally, by providing a separation distance, this may assist a user in more easily distinguishing the respective video streams and may provide a more natural viewing experience at the expense of a reduction in at least one of a size of one or more of the image regions and/or a total number of image regions in the composite image, whereas other users may prefer an arrangement in which no such separation distance is provided.

In some examples, the video stream compositing circuitry 210 can be controlled to arrange the image regions within the composite video image in response to a user input. For example, a user may provide an input specifying positions for one or more of the image regions. Alternatively or in addition, a user may provide an input specifying a predetermined grid arrangement for the image regions, in which the image regions are evenly distributed with respect to at least one of an x axis and a y axis. Alternatively or in addition, a user may provide an input specifying whether a separation distance is to be provided between image regions.

In some examples, the number of video streams received by the receiving circuitry 210 may change over time and the video stream compositing circuitry 210 can be configured to dynamically change the number of respective video streams used for generating the composite video stream. For example, as users log-in and log-out of their online accounts for an online service (such as PlayStation^{®} Network), the number of online users, and thus the number of received video streams, may vary. Alternatively or in addition, a user may be able to log into their account and select a user selectable option (e.g. a graphical icon) to choose whether to allow their video stream to be communicated to the data processing apparatus 200 for composite video stream creation. Hence more generally, in some embodiments of the disclosure the data processing apparatus 200 is configured to receive the plurality of video streams each associated with a different user that is logged into a user account of a same online service. The composite video images may include any suitable number of image regions, and the sizes and shapes of the image regions may be varied according to a number of the video streams to be represented.

A first number of streams may be received at a first point in time T1, and then at a later point in time T2 a second number of streams different from the first number of streams may be received. In some examples, the video stream compositing circuitry 210 can be configured to dynamically increase or decrease the number of video streams used for generating the composite video stream in response to an increase or decrease in the number of video streams received by the receiving circuitry 210. However, the video stream compositing circuitry 210 may be configured to generate the composite video stream to include composite images with a limit on the maximum number of image regions. Therefore, in response to a detection that the number of video streams received by the receiving circuitry 210 exceeds a threshold number, then the video stream compositing circuitry 210 can be configured to select some of the received video streams for use in generating the composite videos stream, such that an increase in the number of received video streams above the threshold number does not cause a change in the number of image regions used in the composite video images. In some examples, a random selection may be used to select which of the received video streams to use.

The video stream compositing circuitry 210 can be configured to dynamically change the number and the arrangement of the respective image portions in the composite video images used for presenting the respective video streams.

For example, the video stream compositing circuitry 210 may select one of a plurality of template images for use in generating a composite video image, in which the plurality of template images have different properties for the image regions. A different template image may be selected depending on the number of video streams received by the receiving circuitry 210 or a number of video streams selected by the video stream compositing circuitry 220. For example, a first template image may comprise a first number of image regions and define the sizes and positions for the image regions, whereas a second template image may comprise a second number of image regions different from the first number of image regions and define different sizes and positions for the image regions.

Figure 5 is a schematic flowchart illustrating a processing method in accordance with embodiments of the disclosure. The processing method comprises: receiving (at a step 510) a plurality of video streams associated with a plurality of users; generating (at a step 520) a composite video stream comprising composite video images, each composite video image comprising a composite video representation associated with video images from two or more of the plurality of video streams; and outputting (at a step 530) the composite video stream.

In some embodiments of the disclosure, the video stream compositing circuitry 220 is configured to select a subset of the plurality of video streams for inclusion in a composite video image and generate the composite video image to comprise a composite video representation associated with video images from the subset of the plurality of video streams. The video stream compositing circuitry 220 can be configured to detect when a number of video streams exceeds a threshold number and generate the composite video stream using a selected subset of the received video streams in response to such a detection. Alternatively or in addition, a selection may be performed to select a subset of the video streams which are likely to be of more relevance to a given user. For example, a first selection may be performed with respect to the received video streams to select a subset of the video stream depending on information associated with a user. In the case that the subset selected for the user exceeds the threshold number, a further selection can be made to select a reduced subset of the video streams for inclusion in the composite video stream.

in the techniques to be discussed below, the video stream compositing circuitry 220 is operable to generate the composite video stream for a specific user and the output circuitry 230 is operable to output the composite video stream to the specific user.

In some embodiments of the disclosure, the video stream compositing circuitry 220 is configured to select a subset of the plurality of video streams for inclusion in the composite video stream in dependence on user information for a given user, and the output circuitry is configured to output the composite video stream to a first processing device associated with the given user. Figure 6 is a schematic flowchart illustrating a processing method in accordance with embodiments of the disclosure. The processing method comprises: receiving (at a step 610) a plurality of video streams associated with a plurality of users; selecting (at a step 620) a subset of the plurality of video streams for inclusion in a composite video stream in dependence on user information for a given user; generating (at a step 630) a composite video stream comprising composite video images, each composite video image comprising a composite video representation associated with video images from each video stream of the selected subset of video streams; and outputting (at a step 640) the composite video stream. Optionally, a further selection step may be performed after the step 620 for cases in which the selected subset exceeds a threshold number, or the selection at the step 620 may be performed to ensure that the selected subset does not exceed the threshold number.

The user information for a given user may be indicative of one or more user properties for the given user and/or one or more user preferences for the given user. For example, the user information may specify properties such as one or more most recently played games (e.g. five most recently played or games played within the last 48 hours, or week or some other period of time). Alternatively or in addition, the user information may specify preferences such as certain genres of video game, certain portions of video games and/or certain in-game characters in an online multiplayer game. The user information may specify other user properties such as geographical location, age and gender.

The user information can thus be used to select some of the plurality of video streams to be used for generating the composite video stream for the given user so that video streams comprising content likely to be of relevance to the given user can be selected. For example, video streams associated with one or more videogames matching the given user's most recently played games may be selected. Video streams associated with a genre of video game specified by the given user as being of interest can be selected. Similarly, video streams associated with other users within a predetermined geographical distance (or within a same state or country) may be selected. Hence more generally, by using user information associated with the given user, a selection of video streams including content likely to be of relevance for the given user can be performed for generating the composite video stream.

In some embodiments of the disclosure, the user information for the given user is indicative of one or more other users associated with the given user, and wherein the video stream compositing circuitry 220 is configured to select the subset of the plurality of video streams in dependence upon the user information for the given user and information indicative of a respective user associated with each video stream of the plurality of video streams.. The user information for the given user may be indicative of a list of other users identified as being associated with the given user. For example, the user information may be user profile information (e.g. associated with a user's account for an online service) and may be indicative of a friends list comprising a number of other users. Users may be distinguished from each other based on identification information such as an ID number or a username associated with their account. The video stream compositing circuitry 220 can thus receive a number of video streams (potentially a large number of the order of tens, hundreds of even thousands) and perform processing for generating a composite video stream for the given user, in which a selection is performed to select a subset of the video streams based on the user information indicative of one or more associated users and information indicative of users associated with the received video streams. Therefore, in some examples the received video streams can be filtered for the given user to obtain a subset of video streams associated with users that are indicated by the user information as being associated with the given user. This may be achieved by matching user IDs or usernames associated with the video streams with those indicated by the user information for the given user so that video stream for which there is a match with the user information are selected and other video streams are not selected. The subset of video streams can thus be used for generating the composite video stream for the given user. Consequently, the composite video stream can be output to the given user to display the composite video images including activities of the associated users. Hence, in some examples the given user can view a stream of composite video images depicting locally and/or remotely executed activities of a plurality of friends.

In some examples, the user information may indicate other users associated with the given user and also other information for ranking at least some of the others users. For example, some users may be indicated as friends of the given user, while other users may be indicated as close friends of the given user (it will be appreciated that further classifications may similarly be provided). Alternatively or in addition, the user information may indicate one or more properties associated with one or more of the other users. For example, properties such as games frequently played and/or most recently played (e.g. last five game played or game played in the last 48 hours or week or other period of time) and/or trophies earned may be indicated. Therefore, the video stream compositing circuitry 220 can be configured to select the subset of the plurality of video streams in dependence upon the user information so as to prioritise selection of some of the other users in dependence on one or more properties associated with one or more of the other users.

More generally, in some embodiments of the disclosure the user information is indicative of one or more other users associated with the given user and one or more properties for one or more of the other users, and the video stream compositing circuitry is configured to select a subset of the plurality of video streams in dependence upon an order of priority for the video streams determined in dependence on the user information for the given user. For example, selection of other users indicated as being close friends can be given higher priority than selection of other users indicated as just friends. As another property for ordering the other users, properties such as whether one or more of the most recently played games match a game (or game genre) indicated as being of interest to the given user may be used for ordering close friends with respect to each other and/or ordering other friends with respect to each other. The composite video stream can be generated for output to the processing device of the given user, in which the video stream compositing circuitry is configured to prohibit selection of the video stream associated with the given user to prohibit inclusion of the video stream associated with the given user in the composite video stream. In some cases, the selection of the video stream can be prohibited, however in other cases the video stream for the given user may not be received by the data processing apparatus 200, e.g. due to the user selecting not to allow sharing of their video stream. Of course, selection can be prohibited in this way, whilst permitting section of the video stream associated with the given user for use in another composite video stream to be output to another user.

Therefore, in the case where a maximum number of video streams that can be included in the composite video stream is set to a value of X, for example, and the number of received video streams is Y (where Y is greater than X), then selection can be performed in dependence on the user information to select video streams associated with other users associated with the given user, in which the order of priority is used to select X video streams that are of likely to be of most relevance for the given user. In some examples, a condition such as selection of just the top Z (e.g. Z = 5, 10 or 20) video streams may be used to select the most relevant video streams.

In some embodiments of the disclosure, the video stream compositing circuitry 220 is configured to select a given video stream from the plurality of received video streams for inclusion in the composite video stream in dependence on a type of activity represented in the video images of the given video stream. The video stream compositing circuitry 220 may be configured to select a given video stream for inclusion in the composite video stream when the video images of the given video stream represent a first type of activity. Hence, a condition of whether a first type of activity is currently represented in the video images of a given video stream may be used for deciding whether to select the given video stream for inclusion in the composite video stream. In response to a change in the type of activity from the first type of activity to a second type of activity, the video stream compositing circuitry 220 can de-select the given video stream so that the given video stream is subsequently not included in the composite video stream. For example, the first type of activity may correspond to game-play activity, whereas the second type of activity may correspond to non-game play activity. More generally, one or more first types of activity may be specified for which a video stream including a first type of activity is selected.

In some embodiments of the disclosure, the video stream compositing circuitry 220 is configured to select a given video stream from the plurality of receive video streams for inclusion in the composite video stream in dependence on whether the given video stream comprises video images of a multiplayer video game. As explained previously, the received video streams may each depict a range of different activities (activity types) associated with the different users. Some users may currently be playing a video game, whereas other users may be waiting for a video game to load or for a match to begin, or browsing one or more menus or other online content. The video stream compositing circuitry 220 can be configured to select video streams for inclusion in the composite video stream by selecting video streams comprising video images visually depicting a multiplayer video game (specifically, a selection of multiplayer video games over single player video games can be used, since multiplayer games can generally be considered to be of higher interest value than single player games, however, in some cases a broader condition of selection of a video stream in dependence on whether the given video stream comprises video images of a multiplayer or single player video game may be used, and then in the event that the number of selected video streams exceeds a threshold, then video streams corresponding to single player video games can be removed from the selection to preferentially retain the streams associated with the multiplayer video games). In this way, video streams including game play of video games by other users (and which may be of interest for spectating and/or for subsequently joining) can be selected for use in generating the composite video stream. Hence, in some cases, the video stream compositing circuitry 220 is configured to generate the composite video stream comprising composite video images, in which each composite video image comprises a plurality of respective image portions each including an image of a multiplayer video game being played. For example, with reference to Figure 4, each of the image portions 410, 420, 430, 440 may include a video image depicting a multiplayer video game (specifically, a networked multiplayer video game played by two or more remote users). Selection in this way may be performed in addition to using the user information for the given user, so that users associated with the given user and also currently playing a multiplayer video game are preferentially selected over users that are associated with the given user and not currently playing a multiplayer video game, or the selection in this way may be made irrespective of the user information for the given user.

in some embodiments of the disclosure, each composite video image comprises a composite video representation comprising a plurality of image regions, and the video stream compositing circuitry is configured to generate the composite video representations so that the plurality of image regions include video images of video games played by different users. Video games played by a plurality of different users can be presented within the composite video images so that a given user that views the composite video stream can quickly and efficiently observe game play for a number of different users. This can increase a likelihood of the given user identifying a video game of interest and which the given user may wish to spectate or potentially join.

In some embodiments of the disclosure, the video stream compositing circuitry 220 is configured to generate the composite video representations so that the plurality of image regions include either video images of a plurality of different video games or video images of a same video game. In some examples, a first image region may be used for presenting video images for a first video game being played by a user and a second image region may be used for presenting video images for a second video game, different from the first video game, being played by another user. In this case, the composite video representations may be used to represent different games being played by different users.

in some examples, the given user may be playing a video game (which may be single player or multiplayer) and the composite video stream can be generated to include composite video frames depicting activities of other users participating in other instances of that same video game title.

In some examples, the given user may be playing a given multiplayer video game, and the selection of the video streams can be performed by the video stream compositing circuitry 220 to select video streams comprising images of the same given multiplayer video game. For example, the given user may be playing a networked multiplayer video game (e.g. a first person shooter game in a massively multiplayer online game) and the composite video stream can be generated to include composite video frames depicting activities of other users participating in the same instance of the video game. Hence, in some examples each of the plurality of image regions in the composite video images may depict a same instance of the video game from different viewpoints for the different respective users. In some examples, one or more further selection conditions may be used to select video streams including users on a same team as the given user. In some cases, however, the given user may not be playing the given multiplayer videogame but may specifically request to receive a composite video stream including video streams for a given instance of a given multiplayer game.

The video stream compositing circuitry 220 may detect whether a video stream comprises images of a multiplayer video game depending on one or more of information associated with the video stream (e.g. metadata associated with the video stream indicative of a video game title) and image analysis with respect to one or more of the video images of the video stream. Image analysis may be performed to detect whether the images correspond to a multiplayer video game. For example, image recognition for one or more image properties may be used for this. In some examples, machine learning algorithms may be used for this purpose to distinguishing images of multiplayer games from images of single player games.

In some embodiments of the disclosure, the composite video stream may comprise composite video images in which a first image portion comprises a video image from a first video stream and a second image portion comprises a video image from a second video stream and the first and second video streams including video images for different video games. For example, the first video stream may comprise video images for a user playing a driving video game (e.g. Gran Turismo^{®} 7), and the second video stream may comprise video images for another user playing a first-person shooter. Hence, the composite video stream can be generated to provide video images comprising composite representations depicting various different games being played by the different users. Hence the composite video stream may depict activities for a community of users associated with the given user to provide the given user with an overview of the current activities of the friends of that user.

in some embodiments of the disclosure, the composite video images include the video images for video games corresponding to video games currently executed by one or more video game processing devices. The video streams can include images of live game play (or substantially live game play e.g. with a small delay) by the different users, which may be live game play for a video game being executed locally by a user's local device or live game play for a video game being executed by one or more remote servers. For example, a user device (e.g. such as the client device 101-1 in Figure 3) may execute a video game to generate a video stream and communicate the video stream to the data processing apparatus 200. Similarly other user devices may also stream their video streams to the data processing apparatus 200. Alternatively or in addition, one or more such video streams from one or more servers may also be received. Therefore, a collection of video streams comprising images of live (or substantially live) game play can be received and used for generating the composite video stream for output to the given user.

Hence more generally in some embodiments of the disclosure, at least some of the video streams comprise video images corresponding to live video games currently executed by one or more video game processing devices.

In some embodiments of the disclosure, the video stream compositing circuitry 220 is configured to vary a subset of the plurality of video streams included in the composite video stream responsive to a user input with respect to a respective composite video image and to generate a subsequent composite video image to comprise a composite video representation associated with video images from another subset of the plurality of video streams.

The output circuitry 230 is configured to output the composite video stream to a user device associated with a given user. Processing can be performed at the user device to generate images for display to the user such that the user views the composite video images. In response to viewing the composite video images, the user may provide an input to request a change to the video streams currently represented in the composite video stream. Any suitable device may be used for providing the user input. For example, the user input may be provided via a display device comprising a touch screen (e.g. a smartphone device or tablet device). In other examples, the user input may be provided via a handheld controller (e.g. such as the controller 43 in Figure 1) or the mouse 46, or other suitable pointing device. Data indicative of the user input can be received by the data processing apparatus 200, and in response to the user input the video stream compositing circuitry 220 is operable to change the subset of video streams used to generate the composite video stream to instead use a different subset. Moreover, at a first point in time, a first subset of the received video streams may be used to generate the composite video stream. In response to receiving the data indicative of the user input for requesting, a second subset of the received video streams which is different from the first subset can be used for generating the composite video stream for output after receiving the data indicative of the user input. The first subset and second subset differ from each other by at least one video stream in the first subset not being present in the second subset.

The user input may comprise an image region selection input with respect to a respective composite video image indicative of an image region removal request. The user may specify an image region (which includes a video image from a respective video stream) to be removed. In response to such a user input, the video compositing circuitry 220 can be configured to stop selecting the video stream associated with the selected image region to thereby remove the video stream from the selected subset. A further video stream (not previously selected for use in the selected subset) may then be selected (e.g. using the techniques discussed previously using the user information) and associated with the selected image region. Alternatively, in some cases, in response to the image region removal request, a further video stream may not be selected so that the user input causes a reduction in the number of video streams used in the composite video stream. For example, a user input corresponding to a double tap operation or a two finger swipe (e.g. in the case of a touch screen) may be used to specify removal of a stream without replacement.

The user input may comprise an image region selection input with respect to a respective composite video image indicative of an image region zoom request. In response to a user input indicative of a selection of an image region and an image region zoom request, the video stream compositing circuitry 220 can be configured to increase a size of the image region in a subsequently generated composite video image so that the image region (and thus the video image from the associated video stream) has a larger appearance in the subsequent composite video image. One or more other image regions can thus be removed to free up space for use by the selected image region resulting in a change in the subset of video streams selected for the composite video stream. Alternatively, in some cases the selected image region may be enlarged and presented so as to overlay one or more other image regions so that at least some portions of the other image regions are obscured by the selected image region. Therefore, the given user can select to zoom-in on a given image region to obtain an enlarged view for the region. Subsequently, a zoom out operation may be performed to return to the previous setting.

In some embodiments of the disclosure, the user input comprises a direction input with respect to a respective composite video image indicative of a scroll direction. A direction input can be provided with respect to a composite image, such as that shown in Figure 4. The direction input may for example be provided via a swipe input with respect to a touch screen or through use of a pointer device. The direction input can specify a direction in which the scroll the composite video image. In response to receiving data indicative of such a user input, the video stream compositing circuitry 220 can be configured to vary the subset of video streams selected for creating the composite video stream to select a different subset. The different subset comprises at least one video stream different from the previously selected subset. In some examples, each video stream in the different subset may be different from the previously selected subset, or a set of video streams included in a peripheral region of a composite video may be replaced. In some examples, the image regions maybe arranged in a grid type arrangement and scrolling may be performed to scroll respective rows and/or columns. Optionally a snap to grid functionality may be used to position the image regions responsive to such direction input from a user.

Figure 6 schematically illustrates another data processing apparatus in accordance with embodiments of the disclosure. In addition to the receiving circuitry 210, the video stream compositing circuitry 220 and the output circuitry 230, embodiments of the disclosure provided a data processing apparatus 700 comprising control circuitry 240. The control circuitry 240 is configured to detect one or more user interface elements in video images associated with at least one video stream of the plurality of video streams and modify the video images to remove information included within one or more of the user interface elements to obtain modified video images, wherein the video stream compositing circuitry is configured to generate the composite video stream in dependence on the modified video images for the at least one video stream. The control circuitry 240 can thus modify video images to remove visual information associated with the different users. The modified images can thus be used by the video stream compositing circuitry 220 for creating the composite video stream with sensitive information having been removed. Hence, when generating the composite video stream, video images associated with a selected video stream selected for inclusion in the composite video stream can be modified to obtain the modified video images, and the modified video images composited with images from other video streams to obtain the composite video stream. Modified images can be obtained for each selected video stream in this way. Alternatively, modified images may be obtained for a given video stream depending on whether a user associated with the video stream selects such processing to be performed for their video stream.

Visual information which may be removed may include sensitive information which users may not wish to be shared with other users and will typically be included in one or more user interface elements. The control circuitry 210 is thus operable to detect user interface (UI) elements included in the video images and use one or more image processing techniques to hinder visibility of the information therein by another user that receives the composite video stream. In a simplest case, the user interface regions can be modified with one or more of a blurring (e.g. Gaussian blurring) effect that blurs pixel values. For example, pixel values may be blended in any suitable manner for the user interface regions. Alternatively, in response to detection of a user interface region, a predetermined colour may be used for shading the pixels therein. Consequently, private information for the different users can be protected when generating the composite video stream. In some cases, video images for some video games may have been generated by overlaying user interface elements on a background image. Hence, some video streams may comprise video images and overlay images comprising user interface elements. In such cases the user interface elements can be removed from the video streams for creating the composite video stream.

In some embodiments of the disclosure, the video stream compositing circuitry 220 is configured to associate metadata with at least one composite video image, the metadata specifying a shortcut for accessing a video game associated with a video stream represented in the at least one composite video image. A video stream included in the composite video stream may comprise video images for a live multiplayer video game that may be a locally executed multiplayer video game or server-executed multiplayer video game. The video stream compositing circuitry 220 can associate metadata with a composite video image so as to provide a shortcut for allowing the given user viewing the composite image to quickly and easily access the video game by accessing one of a same instance of the video game that is represented in the composite image and another instance of the video game. For example, the given user may be able to select an image region (or passively select the image region by hovering a pointer over the image region or gazing at it, optionally, for a predetermined period of time) to be presented with a visual indicator including an option to join the videogame. In response to selection of the visual indicator, an instance of the video game can be launched for the given user either by launching the videogame on the local device, or a remote server device. The instance may be within the same session as that shown within the video stream (i.e. so that the given user can join in play of the game session currently being streamed by the other user), or may be a separate instance (for example in the case of a single player game or a game played in a single player mode, or where the streamed session of the multiplayer game is full and cannot accept new players). In these cases optionally the person playing the streamed instance of the game may be notified that the given user has also started the game, to enable them to co-ordinate their play themselves. Hence more generally, the given user can be facilitated in joining a video game represented the composite video stream via the metadata, in which the joined videogame may be one of a same instance of the video game represented in the composite video stream and a different instance of that same video game.

Hence more generally, in some embodiments of the disclosure the shortcut for accessing the video game associated with the video stream comprises one or more of: a shortcut for joining a same instance of the video game associated with a video stream represented in the at least one composite video image; a shortcut for launching another instance of the video game. Hence, the given user can view the images for the instance of the video game and, using the metadata, join that the instance of the video game. Alternatively, the given user can view the images for the instance of the video game and, using the metadata, launch another instance of the video game. In some examples, the metadata may specify may specify a first shortcut for joining the same instance of the video game represented in the composite video stream and a second shortcut for launching another instance. For example, in some cases the given user may prefer to launch another instance of a multiplayer video game rather than joining the represented instance of the multiplayer video game. Alternatively, for cases in which the video game is a single player video game, the metadata may specify only a shortcut for launching another instance of the video game to allow the given user to launch their own instance of the single player game.

In some cases, the metadata may be associated with at least one image region in the composite video representation, the metadata specifying a shortcut for accessing a video game associated with the at least one image region. In this way, via interaction with the image region in the composite video image, the user can be presented with an option to join the video game using the metadata. In some cases, first metadata may be associated with a first image region including a video image for a first multiplayer video game, and second metadata may be associated with a second image region including a video image for a second multiplayer video game.

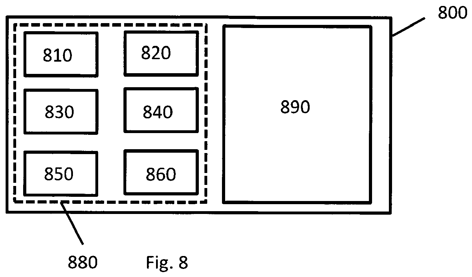

In some embodiments of the disclosure, each composite video image further comprises another image region, wherein the another image region is either a blank region or a transparent region for enabling the composite video image to be used with or as an overlay image. Figure 8 schematically illustrates an example of a composite video image 800 comprising six respective image regions 810, 820, 830, 840, 850 and 860 for displaying video images from respective video streams. In addition to the image regions 810-860, the composite video image 800 comprises the region 890. The dotted region can be considered as a composite video representation region 880 for the composite video image 800. Hence, the composite video image 800 may comprise both the composite video representation region 880 and the region 890. In some examples, the region 890 may be larger in size than the composite video representation region 880.

In some embodiments of the disclosure, the video stream compositing circuitry 220 is configured to select one of a first size and a second size for the another image region 890 in dependence upon a current activity of a given user intended as a recipient for the composite video stream. The video stream compositing circuitry 220 can be configured to vary a size of the region 890 responsive to whether the given user (for which the composite video stream is generated) is currently participating in a video game. Hence, a larger size can be provided for the region 890 when the user is engaged in a video game and a smaller size provided otherwise. Alternatively, a user may provide a user input to specify a size and/or configuration for the region 890 which can be communicated to the data processing apparatus 200.

The region 890 provides a space for which another image generated by another device can be arranged ether as an overlay for the composite video image 800 or by being overlaid by the composite video image 800. For example, a composite video stream comprising a stream of the composite video images having the properties shown in Figure 8 can be output to a processing device associated with a given user, and images generated locally at the processing device can be arranged with respect to the region 890. Therefore, the processing device can generate images for display using the composite video images and images generated locally. For example, images of a video game being played by the given user may be scaled to fit within the region 890 so that the given user can view their own game play whilst viewing a number of video streams associated with other users playing the same game and/or different games.

Of course, in some cases the video stream associated with the video game being played by the given user may be received by the data processing apparatus 200, and processing for compositing the video stream into the region 890 could indeed be performed at the data processing apparatus 200. However, processing efficiency, and in particular use of communication network resources, can be improved by the data processing apparatus 200 generating composite images having the above mentioned blank region or transparent region, and allowing further video compositing to be performed at the processing device of the given user to incorporate the video images of the user's game play. Also, in some cases the given user may wish to receive the composite video stream from the data processing apparatus 200, and may not share their video stream to the data processing apparatus 200. For various reasons the given user may select an option to not to share their video stream.

In some embodiments of the disclosure, the receiving circuitry is configured to receive the plurality of video streams associated with the plurality of users and the output circuitry is configured to output the composite video stream to a given processing device associated with a given user to provide the given user with a composite video stream for viewing activities of different users. One of the plurality of video streams received by the receiving circuitry may correspond to a video stream associated with the given user. Optionally, processing can be performed by the data processing device 200 to include the video stream associated with the given user in the region 890. However, in some embodiments of the disclosure, the video stream compositing circuitry is configured to select a subset of the plurality of video streams (in which the subset does not include the video stream associated with the given user) and generate the composite video stream in dependence on the selected subset of the plurality of video streams, and output the composite video stream for allowing use of the composite video images with or as an overlay image. Hence, the composite video stream can be generated for output to the processing device of the given user, in which the video stream compositing circuitry is configured to prohibit selection of the video stream associated with the given user for the composite video stream.

In some embodiments of the disclosure, the receiving circuitry 210 is configured to receive one or more audio streams associated one or more of the plurality of video streams, wherein the one or more audio streams each comprise one or more of audio data associated with a video game and speech data associated with a user playing the video game, and wherein the output circuitry 230 is configured to output one or more of the audio streams. In some examples, the composite video stream may be output without any accompanying audio. Alternatively, one or more audio streams associated with the video streams used for creating the composite video stream may be output for use with the composite video stream. For example, the data processing apparatus 200 may receive data indicative of a user input corresponding to selection of an image region in a composite image, and in response to the received data the output circuitry 230 may be configured to output an audio stream associated with the video stream corresponding to the selected image region. Hence, a user viewing the composite video images may provide an input to select to receive audio associated with a video stream being viewed in the composite video images. Similarly, the user may provide a further input with respect to the image region to disable the audio and thus instruct the data processing apparatus 200 to cease output of the audio stream. Of course, in some cases a user may request to receive audio for two or more video streams in this way and two or more audio streams may be output by the output circuitry 230. However, the data processing apparatus 200 may comprise audio mixing circuitry configured to generate a combined audio stream in dependence on two or more of the audio streams, and the output circuitry 230 can be configured to output the combined audio stream. Audio mixing for the audio data associated with two or more of the audio streams can be performed by the audio mixing circuitry such that two or more audio streams are input to the audio mixing circuitry and a single combined audio stream is provided as an output. In this way, audio data for two or more of the received audio streams can be output as a respective combined audio stream thus allowing more efficient use of communication network resources.

Hence more generally, in some embodiments of the disclosure the output circuitry 230 is configured to output one or more of the audio streams (or a combined audio stream) associated with the plurality of video streams in response to a user input corresponding to a selection of an image region in a respective composite video image of the composite video stream.

The audio streams can each comprise one or more of audio data associated with a video game and speech data associated with a user playing the video game. Audio data generated during the playing of a video game may comprise various in-game sounds. During playing of video games, users may frequently provide speech input via one or more microphones for providing commentary and/or communicating with other users in the same video game.

For each video stream received by the data processing apparatus 200, the video stream may have an associated audio stream as described above. In some examples, a user can select whether to provide an audio stream in association with their video stream. Hence, users may select to allow their video stream to be received by the data processing apparatus 200 and thus shared with other users as part of a composite video stream, and a user input can allow selection by the user of whether to permit provision of their audio stream to the data processing apparatus 200.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

Thus any required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

It will also be apparent that numerous modifications and variations of the present disclosure are possible in light of the above teachings. It is therefore to be understood that within the scope of the appended claims, the disclosure may be practiced otherwise than as specifically described herein.

## Claims

1. A data processing apparatus comprising:
receiving circuitry to receive a plurality of video streams associated with a plurality of users;
video stream compositing circuitry to generate a composite video stream comprising composite video images, each composite video image comprising a composite video representation associated with video images from two or more of the plurality of video streams; and
output circuitry to output the composite video stream.

2. The data processing apparatus according to claim 1, wherein the composite video representation comprises a plurality of respective image regions, each image region comprising a representation of a video image associated with a different video stream of the plurality of video streams.

3. The data processing apparatus according to claim 2, wherein at least some of the image regions have a substantially same shape and substantially same size in the composite video representation.

4. The data processing apparatus according to any preceding claim, wherein the video stream compositing circuitry is configured to select a subset of the plurality of video streams for inclusion in the composite video stream in dependence on user information for a given user, and the output circuitry is configured to output the composite video stream to a first processing device associated with the given user.

5. The data processing apparatus according to claim 4, wherein the video stream compositing circuitry is configured to select another subset of the plurality of video streams for inclusion in a second composite video stream in dependence upon user information for a second user and generate the second composite video stream, and the output circuitry is configured to output the second composite video stream to a second processing device associated with the second user.

6. The data processing apparatus according to claim 4 or claim 5, wherein the user information for the given user is indicative of one or more other users associated with the given user, and wherein the video stream compositing circuitry is configured to select the subset of the plurality of video streams in dependence on the user information for the given user and information indicative of a respective user associated with each video stream of the plurality of video streams.

7. The data processing apparatus according to any one of claims 4 to 6, wherein the plurality of video streams received by the receiving circuitry comprises a video stream associated with the given user, and the video stream compositing circuitry is configured to prohibit selection of the video stream associated with the given user to prohibit inclusion of the video stream associated with the given user in the composite video stream.

8. The data processing apparatus according to any preceding claim, wherein the video stream compositing circuitry is configured to select a given video stream from the plurality of video streams for inclusion in the composite video stream in dependence on whether the given video stream comprises video images of a multiplayer video game.

9. The data processing apparatus according to any one of claims 2 to 8, wherein the video stream compositing circuitry is configured to generate the composite video representation so that the plurality of image regions include either video images of a plurality of different video games played by different users or video images of a same video game played by different users.

10. The data processing apparatus according to any preceding claim, wherein at least some of the video streams comprise video images corresponding to live video games currently executed by one or more video game processing devices.

11. The data processing apparatus according to any preceding claim, wherein the video stream compositing circuitry is configured to associate metadata with at least one composite video image, the metadata specifying a shortcut for accessing a video game associated with a video stream represented in the at least one composite video image.

12. The data processing apparatus according to claim 11, wherein the shortcut for accessing the video game associated with the video stream comprises one or more of: a shortcut for joining a same instance of the video game associated with the video stream represented in the at least one composite video image; and a shortcut for launching another instance of the video game.

13. The data processing apparatus according to any preceding claim, wherein the receiving circuitry is configured to receive one or more audio streams associated with one or more of the plurality of video streams, wherein the one or more audio streams each comprise one or more of audio data associated with a video game and speech data associated with a user playing the video game, and wherein the output circuitry is configured to output one or more of the audio streams.

14. The data processing apparatus according to any preceding claim, comprising control circuitry configured to detect one or more user interface elements in video images associated with at least one video stream of the plurality of video streams and modify the video images to remove information included within one or more of the user interface elements to obtain modified video images, wherein the video stream compositing circuitry is configured to generate the composite video stream in dependence on the modified video images for the at least one video stream.

15. The data processing apparatus according to any preceding claim, wherein each composite video image further comprises another image region, wherein the another image region is a blank region or a transparent region for enabling the composite video image to be used with or as an overlay image.

16. The data processing apparatus according to claim 15, wherein the video stream compositing circuitry is configured to select one of a first size and a second size for the another image region in dependence upon a current activity of a given user intended as a recipient for the composite video stream.

17. The data processing apparatus according to any preceding claim, wherein the video stream compositing circuitry is configured to vary a subset of the plurality of video streams selected for inclusion in the composite video stream responsive to a user input with respect to a respective composite video image and to generate a subsequent composite video image to comprise a composite video representation associated with video images from another subset of the plurality of video streams.

18. The data processing apparatus according to claim 17, wherein the user input comprises one or more from the list consisting of:
a direction input with respect to a respective composite video image indicative of a scroll direction; and
an image region selection input with respect to the respective composite video image indicative of one of an image region removal request and an image region zoom request with respect to a respective image region.

19. A processing method comprising:
receiving a plurality of video streams associated with a plurality of users;
generating a composite video stream comprising composite video images, each composite video image comprising a composite video representation associated with video images from two or more of the plurality of video streams; and
outputting the composite video stream.

20. Computer software which, when executed by a computer, causes the computer to carry out the method of claim 19.
